# EUROPEAN PATENT SPECIFICATION

(11) **EP 4 569 220 B1**
(45) Date of publication and mention of the grant of the patent: **01.04.2026**
(21) Application number: 23786118.2
(22) Date of filing: 12.10.2023
(51) Int. Cl.: F03D 7/02

(54) **PREVENTING BLADE TOWER STRIKE OF A WIND TURBINE**
VERHINDERUNG DES AUFSCHLAGENS EINES ROTORBLATTES AUF EINEN WINDKRAFTANLAGEN-TURM
PRÉVENTION DE LA COLLISION DE TOUR DE PALE D'UNE ÉOLIENNE

(30) Priority: 04.11.2022 EP 22205501
(43) Date of publication of application: 18.06.2025
(73) Proprietor: Siemens Gamesa Renewable Energy A/S, 7330 Brande (DK)
(72) Inventor: COUTURIER, Philippe, Lafayette, CO 80026 (US); MOLITOR, David, Boulder, CO 80305 (US)
(74) Representative: SGRE-Association
(86) International application number: PCT/EP2023/078305
(87) International publication number: WO 2024/094403

(56) References cited:
- EP-A1- 4 047 204
- US-A1- 2011 135 466

## Description

### FIELD OF THE INVENTION

The present invention relates to a method of estimating a position of at least a first part of a rotor blade of a rotor of a wind turbine during operation of the wind turbine and a method of operating such a wind turbine. It further relates to a computer program for performing such method and a control system configured to carry out such method.

### BACKGROUND

A typical wind turbine includes a tower supporting a nacelle to which in a horizontal direction a rotor is rotatably mounted, the rotor comprising plural rotor blades that are driven by the wind. During operation of the wind turbine, the wind turbine may be exposed to high loads that cause deflections in various components. For example, a rotor blade of the wind turbine may be deflected towards the tower when the wind acts on the rotor blade. The magnitude of the deflection of the rotor blade may be so high that the rotor blade collides with the tower at the next time it passes over the tower, e.g., due to an impulsive loading event such as a large gust or high turbulence wind. Such collision of the rotor blade and the tower ("blade tower strike") may result in a destruction of the wind turbine or of at least several of its components.

Today, the risk of such a collision is reduced by stiffening the rotor blades, coning the rotor blades and/or introducing a large prebend in the rotor blade shape. All these measures reduce the risk of a tower strike since the initial distance between the rotor blades and the tower is increased. However, all these measures have a negative impact on the power production capability of the wind turbine and, thus, reduce its efficiency. Moreover, the effort of production, transport and assembly of the wind turbine is increased due to the required more complex structure and shape of the rotor blades.

Moreover, control approaches are today known that are directed on the prevention of a collision of the rotor blade and the tower by changing the operating state of the wind turbine based on measured data, e.g., by derating the wind turbine. Such an active approach may improve the efficiency of the wind turbine in comparison with the none-active approaches described above. However, the known active approaches may require high-cost hardware, e.g., laser-based measuring systems mounted to the tower, and/or may lack data based on which the collision prevention control may be reliably and, thus, safely performed.

The document EP 4047204 A1 describes a method of determining a distance between a rotor blade tip and a tower of a wind turbine, wherein a strain measurement is used to estimate the distance, the estimation procedure being calibrated by using a distance measurement obtained from a radar or laser sensor.

The document US 2011/0135466 A1 suggests the replacing of such strain, laser, and radar sensors by a single GPS sensor mounted to the blade to monitor the deflection of the wind turbine blade.

### SUMMARY

Accordingly, there is the need to mitigate at least some of the drawbacks mentioned above and to provide a more reliable solution of preventing a collision of a rotor blade and a tower of a wind turbine during operation of the wind turbine, the solution having less impact on the efficiency of the wind turbine.

This need is met by the features of the independent claims. The dependent claims describe embodiments of the invention.

According to an aspect of the invention, a method of estimating a position of at least a part of a rotor blade of a rotor of a wind turbine during operation of the wind turbine is provided. The part of the rotor blade is a first part. The rotor blade is deflected due to a deflection motion of the rotor blade towards or away from a tower of the wind turbine and the position is indicative of said deflection. The method comprises measuring a first parameter by a first measuring unit, wherein the measured first parameter is indicative of an absolute and/or a relative position of at least a second part of the rotor blade or of a further rotor blade of the rotor. The method further comprises measuring one or more second parameters by one or more second measuring units, wherein at least one of the one or more measured second parameters is indicative of an absolute and/or a relative position of at least a third part of the rotor blade or of a/the further rotor blade of the rotor. The method further comprises estimating the position of the at least first part of the rotor blade, wherein the estimating comprises employing a state estimator that estimates a state of the rotor blade based on at least the measured first parameter and the one or more measured second parameters and deriving the position from the estimated state of the rotor blade.

Employing a state estimation technique, e.g., a prediction/correction algorithm as for example a Kalman filter, that is based on measurements provided by plural measuring units allows to continuously provide/to provide each computational cycle of the estimator robust data with a high accuracy, the data being indicative of the estimated position of the at least part of the rotor blade. Consequently, robust and accurate data that is indicative of a distance from the position of the at least part of the rotor blade to the tower may be derived continuously/each computational cycle of the estimator. Accordingly, a highly reliable collision prevention control may be provided by basing the control on such estimated data.

Moreover, the estimated position is updated based on a model implemented by the state estimator and the obtained measurements each computational cycle such that the position of the at least part of the rotor blade is available at nearly any point of time during its rotation with the rotor (at nearly all azimuthal orientation of the rotor). A controller that controls the operation of the wind turbine based on such estimated position is therefore capable to react timely when a critical position of the at least part of the rotor blade is estimated and is no longer limited to only those points of time at which information is provided by the measuring units.

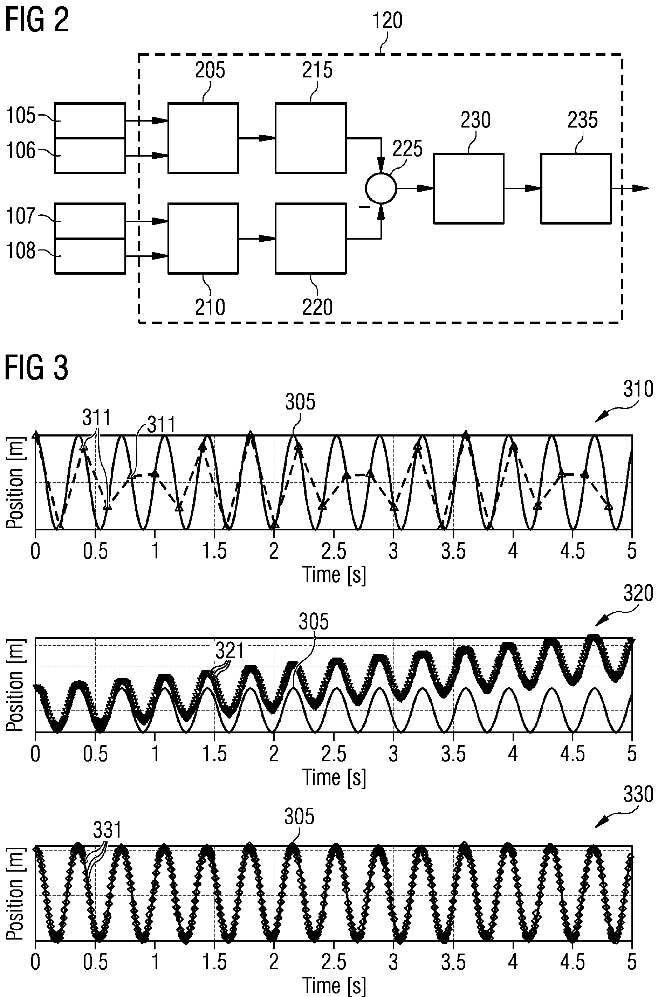

In summary, the above method provides robust data of high accuracy and high continuity/sample rate. A collision prevention control may be reliably based on such data and, thus, safely implemented such that the risk of a collision of the rotor blade and the tower is minimized. An effect of employing the state estimator is hereinbelow discussed with respect to figure 3 in more detail.

It should be clear that one or more first measuring units to measure one or more first parameters and/or one or more second measuring units to measure on or more second parameters can be provided. For example, one, two, or more first and/or second measuring units may be provided on a rotor blade or on each rotor blade. It may be particularly beneficial to provide at least a first measuring unit and a second measuring unit on each rotor blade of the wind turbine rotor.

The wind turbine may comprise an offshore or onshore wind turbine. In particular, the wind turbine may comprise a floating wind turbine.

A herein described measuring unit may for example comprise a sensor or a sensor system comprising one or more sensors. The step of measuring may include, besides the actual measuring, a step of signal pre-processing and post-processing, e.g., filtering.

The rotor blade may comprise a blade tip. At least one of the first part, the second part and the third part of the rotor blade may comprise or be the blade tip. In particular, the blade tip may be that part of the rotor blade that gets closest to the tower when the rotor blade is deflected towards the tower.

It should be clear that at least one of the first part, the second part and the third part may comprise or be any singular point on or section/part of the rotor blade.

None, at least two or all of the first part, the second part and third part of the rotor blade may comprise or be an identical part of the rotor blade. In particular, all of the first part, the second part and the third part of the rotor blade may comprise or be the blade tip. In the latter case, the first part is the same part as the second part and as the third part.

The estimated state of the rotor blade may comprise at least one of a position, a velocity and an acceleration of at least one of the at least first part, the at least second part and the at least third part of the rotor blade, or of another part of the rotor blade.

The estimated state may be indicative of a translational and/or rotational motion of the at least part of the rotor blade. In particular, the indicated motion may be a motion with six degrees of freedom.

The state estimator that estimates the state of the rotor blade may comprise a state observer.

The method may further comprise estimating an uncertainty parameter indicative of an uncertainty of the estimated position of the at least first part of the rotor blade and/or of the estimated state of the rotor blade, wherein preferably estimating the uncertainty comprises employing the state estimator. The uncertainty parameter may for example comprise a variance and/or covariance of the estimated position and/or of the estimated state.

The state estimator may implement a mathematical and/or physical model based on which the state of the rotor blade and/or the uncertainty parameter are estimated.

The first parameter may comprise at least one of an acceleration, a velocity and a position of the at least second part of the rotor blade or of the further rotor blade. When the first parameter is indicative of the relative position, the first parameter may comprise the acceleration and/or the velocity of the at least second part of the rotor blade or of the further rotor blade.

The at least one of the one or more second parameters may comprise at least one of an acceleration, a velocity and a position of the at least third part of the rotor blade or of the further rotor blade. When the at least one of the one or more second parameters is indicative of the relative position, the at least one of the one or more second parameters may comprise the acceleration and/or the velocity of the at least third part of the rotor blade or of the further rotor blade.

In an example, the measured first parameter may only be indicative of the relative position and the measured second parameter may only be indicative of the absolute position - or vice versa.

According to an optional exemplary configuration, the first measuring unit may comprise an inertial measurement unit. The second measuring unit may comprise a receiver for receiving global positioning data. The inertial measurement unit may provide measurements indicative of a relative position more frequently than the receiver for receiving global positioning data provides measurements indicative of an absolute position. By using both in the state estimator, the position of the blade part can be estimated frequently with high repetition rate, i.e. a plurality of times during a revolution of the wind turbine rotor. At the same time, the absolute position measurement may ensure the accuracy of the position estimation over prolonged periods of time.

For example, the first parameter may be measured with a frequency that is at least 5, preferably at least 10 times higher than a frequency with which the second parameter is measured. Further, the first parameter may be measured a plurality of times during a revolution of the wind turbine rotor, e.g. more than 10, 15, or 20 times. The likelihood for the blade coming close to or hitting the tower may thus be estimated accurately (immediately) prior to the blade passing the tower, e.g. by employing current measurements from the first measuring unit that, e.g., have been taken within the last quarter of the blade's revolution before passing the tower.

According to an example, a method of operating a wind turbine is provided. Operating the wind turbine comprises performing any of the herein described methods in order to estimate a position of at least a part of a rotor blade of a rotor of the wind turbine during operation of the wind turbine and determining a distance between a tower of the wind turbine and the rotor blade based on a position of at least a part of the tower and the estimated position of the at least part of the rotor blade. Preferably, the wind turbine is operated based on the determined distance.

Determining the distance may comprise deriving a difference between the position of the at least part of the tower and the estimated position of the at least part of the rotor blade. Preferably, the derived distance may be a (multidimensional) Euclidean distance.

According to an example, the at least part of the tower comprises at least a first part of the tower and the tower performs a tower motion towards or away from the rotor blade during operation of the wind turbine. Operating the wind turbine comprises measuring a further first parameter by a further first measuring unit, wherein the measured further first parameter is indicative of an absolute and/or a relative position of at least a second part of the tower. Measuring one or more further second parameters by one or more further second measuring units, wherein at least one of the one or more measured further second parameters is indicative of an absolute and/or a relative position of at least a third part of the tower, and estimating the position of the at least first part of the tower, wherein the estimating comprises employing a state estimator that estimates a state of the tower based on at least the measured further first parameter and the one or more measured further second parameters and deriving the position from the estimated state of the tower.

For the same reasoning as outlined above with respect to the estimation of rotor blade positions, employing a state estimator that monitors the tower motion allows to provide an estimated position of the at least part of the tower that is highly accurate, robust, and continuously updated/updated each computational cycle of the estimator. Basing the estimation of the tower blade distance on such estimated tower position instead of for example a predetermined (constant) tower position, further improves the accuracy of the estimated tower blade distance. Consequently, the risk of a collision of the rotor blade and the tower may be determined even more reliable. This may be particularly beneficial when the wind turbine is an offshore or floating wind turbine, the motion of components of which, e.g., the support structure, may significantly affect the global position of the blade and tower and thus affect the blade tower distance.

The tower may comprise a passable part that is passed by the blade tip during operation of the wind turbine. Preferably, the passable part may be an outer wall of the tower.

At least one of the first part, the second part and the third part of the tower may comprise or be the passable part.

It should be clear that at least one of the first part, the second part and the third part may comprise or be any singular point on or section/part of the tower.

None, at least two or all of the first part, the second part and third part may comprise or be an identical part of the tower. In particular, all of the first part, the second part and the third part of the tower may comprise or be the passable part. In the latter case, the first part is the same part as the second part and as the third part.

The estimated state of the tower may comprise at least one of a position, a velocity and an acceleration of at least a part of the tower or, preferably, of the at least part of the tower.

The estimated state may be indicative of a translational and/or rotational motion of the at least part of the tower. In particular, the indicated motion may be a motion with six degrees of freedom.

The state estimator that estimates the state of the tower may comprise a state observer.

The method may further comprise estimating an uncertainty parameter indicative of an uncertainty of the estimated position of the at least first part of the tower and/or of the estimated state of the tower, wherein preferably estimating the uncertainty comprises employing the state estimator. The uncertainty parameter may for example comprise a variance and/or covariance of the estimated position and/or of the estimated state.

The state estimator may implement a mathematical and/or physical model based on which the state of the tower and/or the uncertainty parameter are estimated.

The further first parameter may comprise at least one of an acceleration, a velocity and a position of the at least second part of the tower. When the further first parameter is indicative of the relative position, the further first parameter may comprise the acceleration and/or the velocity of the at least second part of the tower.

The at least one of the one or more further second parameters may comprise at least one of an acceleration, a velocity and a position of the at least third part of the tower. When the at least one of the one or more further second parameters is indicative of the relative position, the at least one of the one or more further second parameters may comprise the acceleration and/or the velocity of the at least third part of the tower.

In an example, the further first parameter may only be indicative of the relative position and the at least one of the one or more further second parameters may only be indicative of the absolute position - or vice versa.

In an example, at least one of the first measuring unit, the further first measuring unit, the one or more second measuring units and the one or more further second measuring units may comprise one or more inertial measurement units and/or one or more receivers for receiving global position data.

In particular, the first measuring unit and/or the further first measuring unit may comprise one or more inertial measurement units, and/or the second measuring unit and/or the further second measuring unit may comprise one or more receivers for receiving global position data.

The estimated state of the rotor blade may be estimated at a point of time after the rotor blade has passed the tower and before a future point of time at which the rotor blade passes the tower again or next. Deriving the estimated position of the at least part of the rotor blade may comprise predicting the position of the at least part of the rotor blade at the future point of time based at least on the estimated state of the rotor blade.

Predicting the position of the at least part of the rotor blade may further be based on one or more previous positions of the at least part of the rotor blade.

Predicting the position of the at least part of the rotor blade may further be based on a (dynamic) model that is at least indicative of a motion of the at least part of the rotor blade. The model may for example comprise a constant acceleration motion model.

For example, given a current state comprising an acceleration, velocity and position of the at least part of the rotor blade and assuming a constant acceleration motion model, the position of the at least part of the rotor blade at the future point of time is computable. Moreover, the predicting may further take previously obtained data, e.g., previous positions of the rotor blade, into account.

The estimated state of the tower may be estimated at a point of time after the rotor blade has passed the tower and before a future point of time at which the rotor blade passes the tower again or next. Deriving the estimated position of the at least part of the tower may comprise predicting the position of the at least part of the tower at the future point of time based at least on the estimated state of the tower.

Predicting the position of the at least part of the tower may further be based on one or more previous positions of the at least part of the tower.

Predicting the position of the at least part of the tower may further be based on a (dynamic) model indicative of a motion of the at least part of the tower. The model may for example comprise a constant acceleration motion model.

For example, given a current state comprising an acceleration, velocity and position of the at least part of the tower and assuming a constant acceleration motion model, the position of the at least part of the tower at the future point of time is computable. Moreover, the predicting may further take previously obtained data, e.g., previous positions of the tower, into account.

The distance may be a distance at the future point of time, the distance being derived based on the predicted position of the at least part of the rotor blade and on the position of the at least part of the tower, the position of the at least part of the tower being preferably predicted.

Such predicting is beneficial since the prediction may allow a collision prevention control to anticipate and react, e.g., by adjusting an operation of the wind turbine, before a critical rotor blade to tower distance occurs. Further, the prediction may allow not to react, i.e., continue the operation of the wind turbine, although a critical distance has occurred when it is predicted that the distance will re-increase to an acceptable level before the rotor blade will pass the tower again. This way, the collision prevention may operate more reliably/safely and more efficiently.

In an example, the wind turbine comprises one or more further rotor blades and the estimating, in particular the predicting, may be further or exclusively based on one or more (previously) estimated positions of the one or more further rotor blades and/or on one or more (previously) determined distances between the tower and the one or more further rotor blades.

According to an example, operating the wind turbine comprises determining whether the determined distance exceeds a threshold. Alternatively or additionally, operating the wind turbine comprises deriving, based at least on the determined distance between the tower and the rotor blade, a likelihood that the rotor blade collides with the tower at a future point of time at which the rotor blade passes the tower and determining whether the derived likelihood exceeds a threshold. Preferably, deriving the likelihood is further based on one or more further determined distances between the tower and the rotor blade, the one or more further determined distances being determined at a point of time before the distance is determined.

According to an example, the method comprises adjusting an operation of the wind turbine when it is determined that the threshold is exceeded. Alternatively or additionally, the method comprises continuing or not adjusting an operation of the wind turbine when it is determined that the threshold is not exceeded.

Adjusting the operation of the wind turbine may comprise reducing a load that acts on the wind turbine and in particular on the rotor blade. The adjusting may for example comprise altering a blade pitch of the rotor blade and/or yawing a nacelle of the wind turbine.

According to an example, employing the state estimator that estimates the state of the tower and/or the state estimator that estimates the state of the rotor blade comprises employing a prediction/correction algorithm, in particular a Kalman filter, and/or a Luenberger observer.

According to an aspect of the invention, a control system for controlling an operation of a wind turbine is provided. The control system is configured to perform any of the herein described methods.

According to an aspect of the invention, a wind turbine is provided. The wind turbine is configured to be controlled by any of the herein described control systems.

According to an aspect of the invention, a system for controlling an operation of a wind turbine is provided. The system comprises a first measuring unit, one or more second measuring units, and any of the herein described control systems, wherein the control system is communicatively coupled to the wind turbine, the first measuring unit and the one or more second measuring units. Preferably, the system comprises a further first measuring unit communicatively coupled to the control system, and one or more further second measuring units communicatively coupled to the control system.

At least one of the first measuring unit and the one or more second measuring units may be mounted to the rotor blade of the wind turbine. Alternatively or additionally, at least one of the further first measuring unit and the one or more further second measuring units may be mounted to the tower of the wind turbine. In an particular example, the measuring units that are mounted to the tower may comprise one or more measuring units that are mounted to a support structure of the tower.

The first measuring unit may comprise at least one of an accelerometer, an angular rate sensor, a gyroscope and an inertial measurement unit. Alternatively or additionally, the one or more second measuring units may comprise at least a receiver for receiving global positioning data, in particular a GNSS receiver and/or a GPS receiver.

The further first measuring unit may comprise at least one of an accelerometer, an angular rate sensor, a gyroscope and an inertial measurement unit. Alternatively or additionally, the one or more further second measuring units may comprise at least a receiver for receiving global positioning data, in particular a GNSS receiver and/or a GPS receiver.

Employing a state estimator for data fusion, i.e., a position estimation as herein described, may allow the use of rather low-cost measuring units, e.g., one or more inertial measurement units and/or one or more receivers for receiving global positioning data, without a loss of accuracy and, thus, without a loss of system reliability. Accordingly, the costs of a reliable collision prevention system may be reduced since high-cost hardware is no longer required.

According to an aspect of the invention, a computer program controlling an operation of a wind turbine is provided. The computer program comprises control instructions which, when executed by a processing unit of a control system controlling the operation of the wind turbine, cause the processing unit to perform any of the herein described methods.

According to an aspect of the invention, a computer program for estimating a position of at least a part of a rotor blade of a rotor of a wind turbine during operation of the wind turbine is provided. The computer program comprises control instructions which, when executed by a processing unit, cause the processing unit to perform any of the herein described methods of estimating a position of at least a part of a rotor blade of a rotor of a wind turbine during operation of the wind turbine.

According to an aspect of the invention, a method of estimating a position of at least a part of a tower of a wind turbine during operation of the wind turbine is provided. The part of the tower is a first part. The tower performs a tower motion towards the rotor blade during operation of the wind turbine. The method comprises measuring a further first parameter by a further first measuring unit, wherein the measured further first parameter is indicative of an absolute and/or a relative position of at least a second part of the tower. The method further comprises measuring one or more further second parameters by one or more further second measuring units, wherein at least one of the one or more measured further second parameters is indicative of an absolute and/or a relative position of at least a third part of the tower. The method further comprises estimating the position of the at least first part of the tower, wherein the estimating comprises employing a state estimator that estimates a state of the tower based on at least the measured further first parameter and the one or more measured further second parameters and deriving the position from the estimated state of the tower.

According to an aspect of the invention, a computer program for estimating a position of at least a part of a tower of a wind turbine during operation of the wind turbine is provided. The computer program comprises control instructions which, when executed by a processing unit, cause the processing unit to perform any of the herein described methods of estimating a position of at least a part of a tower of a wind turbine during operation of the wind turbine.

A herein described computer program may be provided on a volatile or non-volatile storage medium or data carrier.

A herein described processing unit may for example include a digital signal processor, an application specific integrated circuit, a field programmable gate array, a microprocessor or the like. A herein described memory unit may include RAM, ROM, Flash Memory, a hard disk drive and the like.

It is to be understood that the features mentioned above and those yet to be explained below can be used not only in the respective combinations indicated, the scope of protection being defined by the appended claims.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 is a schematic drawing illustrating a system for controlling an operation of a wind turbine according to an example.
Fig. 2 is a schematic drawing showing a control system and a signal flow chart illustrating an operation of the control system according to an example.
Fig. 3 is a schematic diagram, the diagram exemplarily including a first graph illustrating true position data and position data measured by a first measuring unit over time, a second graph illustrating the true position data and position data measured by a second measuring unit over time and a third graph illustrating the true position data and estimated position data over time, the estimated position data being estimated based on the measured data of the first and second measuring units.
Fig. 4 is a schematic flow diagram illustrating a method of operating a wind turbine according to an example.

### DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

A collision of a rotor blade and a tower of a wind turbine may herein also be referred to as "blade tower strike" or as "tower strike", unless otherwise noted or otherwise indicated by the context.

It should be clear that descriptions and explanations herein which are limited to one or more specific components of a wind turbine may be applied to identical or corresponding components of the wind turbine. For example, descriptions and explanations that are limited to one rotor blade of the wind turbine may be applied to each of the remaining rotor blades of the wind turbine. For example, descriptions and explanations that are limited to the tower of the wind turbine may be applied to one of the rotor blades of the wind turbine - and vice versa.

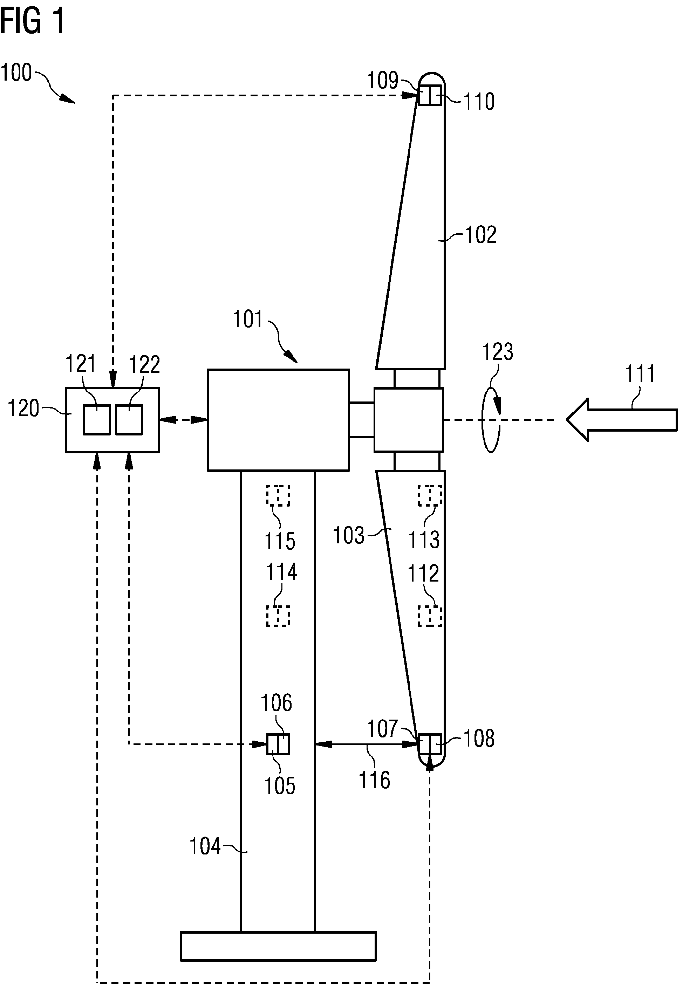

Figure 1 is a schematic drawing illustrating a system 100 for controlling an operation of a wind turbine 101 according to an example.

The wind turbine 101 may comprise a rotor with rotor blades 102, 103 (first and second blade shown, third blade not shown) and a tower 104. The rotor may rotate driven by the wind in a direction following azimuth orientation 123. The wind may follow a wind direction 111. Each of the plural rotor blades 102, 103 may be deflected towards tower 104 due to the incoming wind, thereby reducing a respective distance 116 from each of the rotor blade 102, 103 to the tower 104. In dependence on the magnitude of the deflection, a risk of a collision of one of the rotor blades 102, 103 and the tower 104 may occur when the distance 116 becomes too small.

The system 100 may comprise a first measuring unit 107 and a second measuring unit 108. The measuring units 107, 108 may be mounted to a part of the rotor blade 103. In figure 1, the measuring units 107, 108 are exemplarily mounted to a part of the rotor blade 103 that is located in an area of the rotor blade tip. The first measuring unit 107 may be configured to measure a first parameter that is indicative of a relative position of the rotor blade tip, e.g., an acceleration and/or a velocity of the rotor blade tip toward and/or away from the tower 104. For example, the first measuring unit 107 may comprise at least an inertial measurement unit. The second measuring unit 108 may be configured to measure a second parameter that is indicative of an absolute position of the rotor blade tip, e.g., global positioning data and in particular GNSS and/or GPS data. For example, the second measuring unit 108 may comprise at least a receiver for receiving the global positioning data.

The system 100 may further comprise a further first measuring unit 105 and a further second measuring unit 106. The measuring units 105, 106 may be mounted to a part of the tower 104. In figure 1, the measuring units 105, 106 are exemplarily mounted to a part of the tower 104 that is passed by the blade tip during operation of the wind turbine 101. The further first measuring unit 105 may be configured to measure a further first parameter that is indicative of a relative position of the part of the tower, e.g., an acceleration and/or a velocity of said part toward or away from the rotor blade 103. For example, the further first measuring unit 105 may comprise at least an inertial measurement unit. The further second measuring unit 106 may be configured to measure a further second parameter that is indicative of an absolute position of the part of the tower, e.g., global positioning data and in particular GNSS and/or GPS data. For example, the further second measuring unit 106 may comprise at least a receiver for receiving the global positioning data.

The system 100 further comprises a control system 120 comprising a processing unit 121 and a memory unit 122. The measuring units are communicatively coupled to the control system 120 to provide the control system 120 with the measured parameters. The control system 120 may be configured to determine the distance 116 for each of the rotor blades 102, 103 based on the provided measured parameters. The control system 120 may further be configured to determine whether a risk exists that one of the rotor blades 102, 103 collides with the tower 104 based on the determined distances and to modify/adjust the operation of the wind turbine 101 when the risk exists. For this purpose, the control system 120 may be communicatively coupled with the wind turbine 101.

Each of the rotor blades of wind turbine 101 may be equipped with measuring units, as for example indicated by measuring units 109, 110 which are mounted to rotor blade 102. As a result, the position of each of the existent rotor blades may be monitored separately. Accordingly, for each of the blades a blade tower distance may be monitored separately.

It should be clear that neither the number, location nor the type of the measuring units is limited to the given examples. Any type of measuring unit that directly or indirectly measures a parameter that is indicative of an absolute and/or relative position of at least a part of the tower or at least a part of one of the rotor blades may be used, e.g., a strain gauge, a laser-based system and a leaky feeder radar. Moreover, it may be possible that further measuring units are arranged on the tower 104 and the rotor blade 108, as exemplarily indicated by measuring units 112-115. It may further be possible that a further measuring unit is used that is arranged external of the wind turbine 101. When further measuring units are implemented, controlling the operation of the wind turbine 101 may also be based on the parameters measured by such further measuring units. That way, the risk of a collision of the rotor blade 102, 103 and the tower 104 may be further reduced since the amount of provided measured data is increased which may improve the reliability of the estimation.

Figure 2 is a schematic drawing showing the control system 120 and a signal flow chart illustrating an operation of the control system 120 according to an example.

The measured further first parameter and the measured further second parameter may be provided by measuring unit 105 and measuring unit 106 to a tower state estimating unit 205. The tower state estimating unit 205 may output an estimated state of the tower 104. The estimated tower state may represent a motion that is currently performed by the tower 104. Accordingly, the estimated tower state may comprise a current acceleration, velocity and position of the tower 104. The estimated tower state may be generated by employing a state estimator based on at least the provided measured further first parameter and the provided measured further second parameter. The state estimator may for example comprise a prediction/correction algorithm, in particular a Kalman filter, and/or a Luenberger observer. In an example, the state estimator may implement a model based on which the estimation is performed. The model may comprise a constant acceleration motion model. Furthermore, an uncertainty parameter may be generated that is indicative of the uncertainty of the estimated state of the tower 104 (and of the one or more state parameters comprised by the estimated state).

The estimated tower state may be provided to a tower position deriving unit 215. The deriving unit 215 may output an estimated position of the tower 104 which preferably comprises an uncertainty associated with the estimated position of the tower 104, the estimated tower position and/or the associated uncertainty being derived from the estimated state of the tower 104.

In an exemplary implementation, the deriving may comprise a prediction of the tower position at a future point of time at which the rotor blade 103 passes the tower 104 again or next. In such an implementation, the estimated state of the tower 104 may be estimated at a point of time after the rotor blade 103 has passed the tower 104 and before the rotor blade will pass the tower 104 again or next. The prediction may be performed by starting from the estimated state of the tower and computing forward in time based on an (dynamic) model (e.g., a constant acceleration motion model indicative of the tower motion), thereby simulating the expected motion of the tower 104.

The measured first parameter and the measured second parameter may be provided by measuring unit 107 and measuring unit 108 to a rotor blade state estimating unit 210. The rotor blade state estimating unit 210 may output an estimated state of the rotor blade 103. The estimated rotor blade state may represent a motion that is currently performed by the rotor blade 103. Accordingly, the estimated rotor blade state may comprise a current acceleration, velocity and position of the rotor blade 103. The estimated rotor blade state may be generated by employing a state estimator based on at least the provided measured first parameter and the provided measured second parameter. The state estimator may for example comprise a prediction/correction algorithm, in particular a Kalman filter, and/or a Luenberger observer. In an example, the state estimator may implement a model based on which the estimation is performed. The model may comprise a constant acceleration motion model. Furthermore, a uncertainty parameter may be generated that is indicative of the uncertainty of the estimated state of the rotor blade 103 (and of the one or more state parameters comprised by the estimated state).

The estimated rotor blade state may be provided to a rotor blade position deriving unit 220. The deriving unit 220 may output an estimated position of the rotor blade 103 which preferably comprises an uncertainty associated with the estimated position of the rotor blade 103, the estimated rotor blade position and/or the associated uncertainty being derived from the estimated state of the rotor blade 103.

In an exemplary implementation, the deriving may comprise a prediction of the rotor blade position at a future point of time at which the rotor blade 103 passes the tower 104 again or next. In such an implementation, the estimated state of the rotor blade 103 may be estimated at a point of time after the rotor blade 103 has passed the tower 104 and before the rotor blade will pass the tower 104 again or next. The prediction may be performed by starting from the estimated state of the rotor blade and computing forward in time based on an (dynamic) model (e.g., a constant acceleration motion model indicative of the rotor blade motion), thereby simulating the expected motion of the rotor blade 103.

Based on the estimated tower position and the estimated rotor blade position, a distance between the rotor blade 103 and the tower 104 may be determined at subtraction point 225, e.g., by computing a difference, preferably a Euclidean difference, between the estimated positions. Moreover, an uncertainty parameter indicative of an uncertainty of the estimated distance may be derived based on the uncertainty parameters of the estimated tower position and of the estimated rotor blade position. The uncertainty parameter associated with the estimated distance may for example be derived according to the teachings of the theory of uncertainty propagation of how to compute a difference of two uncertainty affected parameters.

At threshold exceedance determining unit 230, it may be determined whether the determined distance exceeds a predetermined, e.g., user-set, threshold. Alternatively or additionally, a likelihood that the rotor blade 103 collides with the tower 104 at the future point of time may be derived and it may be determined whether the derived likelihood exceeds a predetermined, e.g. user-set, threshold. The likelihood may for example be derived from the uncertainty parameter of the distance. The result of the determination may be provided to operation modifying unit 235.

In an example, deriving the likelihood may further be based on one or more further determined distances between the tower and the rotor blade, the one or more further determined distances being determined at a point of time before the distance is determined. This way, information obtained from historical/empirical data may be considered.

When it is determined that the threshold is exceeded, one or more control commands may be generated and output by the operation modifying unit 235, the commands adjusting an operation of the wind turbine 101. Adjusting the operation may comprise performing an operation that increases the distance between the tower and the rotor blade, e.g., by reducing a load acting on the rotor blades. When it is determined that the threshold is not exceeded, the operation of the wind turbine may be continued/not be adjusted.

Figure 3 is a schematic diagram, the diagram exemplarily including a first graph 310 illustrating true position data 305 and position data 311 measured by a first measuring unit over time, a second graph 320 illustrating the true position data 305 and position data 321 measured by a second measuring unit over time and a third graph 330 illustrating the true position data 305 and estimated position data 331 over time, the position data 331 being estimated based on the measured data 311, 321 of the first and second measuring unit.

For example, the first measuring unit may be the measuring unit 105, the second measuring unit may be measuring unit 106, as shown in figure 1. The first measuring unit may for example comprise one or more receivers for receiving global positioning data. Accordingly, the position data 311 may be global positioning data, i.e., data indicative of an absolute position of the tower 104. The second measuring unit may for example comprise one or more inertial measurement units. Accordingly, the position data 321 may be derived from parameters that are indicative of a relative position of the tower, e.g., acceleration and/or velocity of the tower 104.

As can be seen from the true position data 305, the tower 104 vibrates/oscillates with a constant frequency. However, since the sampling frequency of the receiver of global positioning data (position data 311) is lower than the vibration frequency, it is unable to accurately capture the true position data as there is significant aliasing. Moreover, the low sampling frequency inherently limits the updating rate of the position data of the tower. In contrast, the position data 321 derived from the measurements of the inertial measurement unit is obtained at a sampling frequency which provides a sufficient high update rate of the tower position and that is sufficient high such that the waveform may be seen. However, there is drift in the output position signal. The drift is typical for inertial measurement unit measured position data such that data recorded for a longer time period, e.g., longer than 0.5 seconds, may lack accuracy.

Combining both the position data 311 and the position data 321 by employing a state estimator, e.g., a Kalman filter, allows to provide position data 331 over time with a high enough accuracy and at a high enough sampling rate, as can be seen in the graph 330.

In a simplified consideration, by employing the state estimator, the position data 311 is used as anchors, i.e., these are noted as true positions. The position data between these anchor points is found by the relative kinematics of the inertial measurement unit. Since the inertial measurement unit is only being relied upon to produce position data for short periods, the error incurred due to the drift is within the acceptable error tolerance. Thus, a state estimator that uses both global positioning data and inertial measurement unit measurements may provide highly accurate position data with a high sample rate/following a short computational cycle. As a result, a downstream collision prevention control may be provided that operates based on such position data in a more accurate and, thus, reliable way.

It should be clear that the above outlined with respect to figure 3 and regarding the position estimation of the tower holds correspondingly true for the position estimation of the rotor blade.

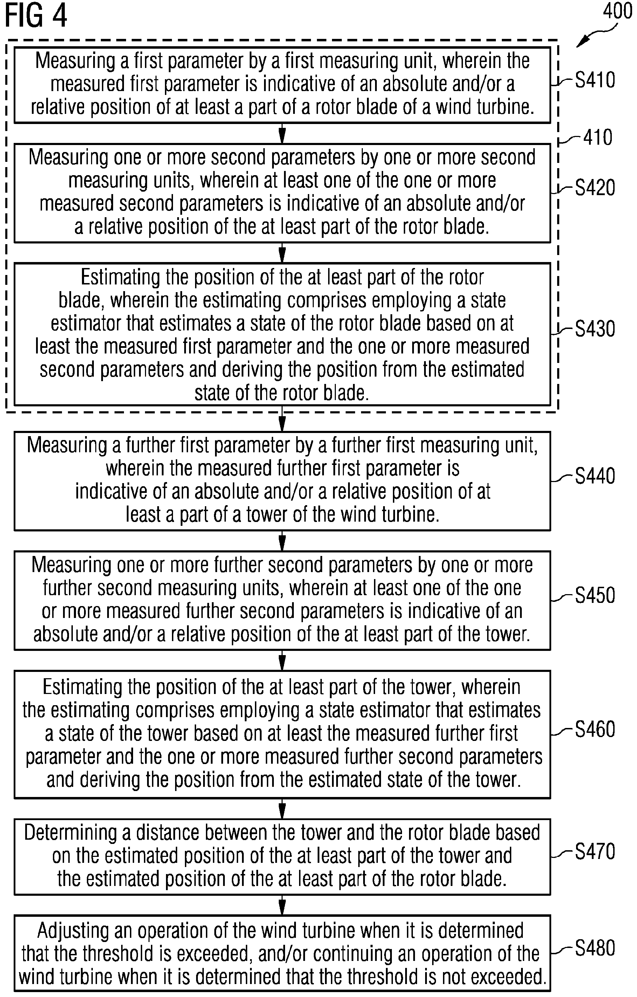

Figure 4 is a schematic flow diagram illustrating a method of operating a wind turbine, as for example the wind turbine 101, according to an example.

The sequence of the method steps in figure 4 is not limited to the shown sequence. The method is further not limited to the shown number of steps. Certain steps of the method may be replaced, extended, or not be carried out.

Operating the wind turbine may comprise performing a method 410 in order to estimate a position of at least a part of the rotor blade of a rotor of the wind turbine during operation of the wind turbine. The rotor blade may be deflected due to a deflection motion of the rotor blade towards a tower of the wind turbine. The position may be indicative of said deflection.

In a step S410, the method 400 may comprise measuring a first parameter by a first measuring unit, wherein the measured first parameter is indicative of an absolute and/or a relative position of at least a part of a rotor blade of a wind turbine.

In a step S420, the method 400 may comprise measuring one or more second parameters by one or more second measuring units, wherein at least one of the one or more measured second parameters is indicative of an absolute and/or a relative position of the at least part of the rotor blade.

In a step S430, the method 400 may comprise estimating the position of the at least part of the rotor blade, wherein the estimating comprises employing a state estimator that estimates a state of the rotor blade based on at least the measured first parameter and the one or more measured second parameters and deriving the position from the estimated state of the rotor blade.

The tower may perform a tower motion towards the rotor blade during operation of the wind turbine.

In a step S440, the method 400 may comprise measuring a further first parameter by a further first measuring unit, wherein the measured further first parameter is indicative of an absolute and/or a relative position of at least a part of the tower of the wind turbine.

In a step S450, the method 400 may comprise measuring one or more further second parameters by one or more further second measuring units, wherein at least one of the one or more measured further second parameters is indicative of an absolute and/or a relative position of the at least part of the tower.

In a step S460, the method 400 may comprise estimating a position of the at least part of the tower, wherein the estimating comprises employing a state estimator that estimates a state of the tower based on at least the measured further first parameter and the one or more measured further second parameters and deriving the position from the estimated state of the tower.

In a step S470, the method 400 may comprise determining a distance between the tower and the rotor blade based on the estimated position of the at least part of the tower and the estimated position of the at least part of the rotor blade. In a step S480, the method 400 may comprise adjusting an operation of the wind turbine when it is determined that the threshold is exceeded, and/or continuing an operation of the wind turbine when it is determined that the threshold is not exceeded.

In example of method 400, the at least part of the rotor blade may comprise the first part, the second part and the third part of the rotor blade and/or the at least part of the tower may comprise the first part, the second part and the third part of the tower, as herein discussed above.

While specific embodiments are disclosed herein, various changes and modifications can be made without departing from the scope of the invention. The present embodiments are to be considered in all respects as illustrative and non-restrictive, and all changes coming within the meaning of the appended claims are intended to be embraced therein.

## Claims

1. A method of estimating a position of at least a part of a rotor blade of a rotor of a wind turbine during operation of the wind turbine, the part of the rotor blade being a first part, wherein the rotor blade (103) is deflected due to a deflection motion of the rotor blade towards or away from a tower (104) of the wind turbine (101) and wherein the position is indicative of said deflection, wherein the method comprises
measuring a first parameter by a first measuring unit (107), the first measuring unit (107) comprising an inertial measurement unit, wherein the measured first parameter is indicative of a relative position of at least a second part of the rotor blade (103) or of a further rotor blade (102) of the rotor,
measuring a second parameter by a second measuring unit (108), the second measuring unit (108) comprising at least a receiver for receiving global positioning data, wherein the measured second parameter is indicative of an absolute position of at least a third part of the rotor blade (103) or of the further rotor blade (102) of the rotor, and
estimating the position of the at least first part of the rotor blade (103), wherein the estimating comprises employing a state estimator (210) that estimates a state of the rotor blade (103) based on at least the measured first parameter and the measured second parameter and deriving the position from the estimated state of the rotor blade (103).

2. The method of claim 1, wherein the first parameter comprises at least one of an acceleration and a velocity of the at least second part of the rotor blade (103) or of the further rotor blade (102), and/or
wherein the second parameter comprises a position of the at least third part of the rotor blade (103) or of the further rotor blade (102).

3. A method of operating a wind turbine, wherein operating the wind turbine comprises
performing a method according to claim 1 or 2 in order to estimate a position of at least a part of a rotor blade (103) of a rotor of the wind turbine (101) during operation of the wind turbine, and
determining a distance between a tower (104) of the wind turbine (101) and the rotor blade (103) based on a position of at least a part of the tower (104) and the estimated position of the at least part of the rotor blade (103).

4. The method of claim 3, wherein the at least part of the tower (104) comprises at least a first part of the tower (104) and wherein the tower (104) performs a tower motion during operation of the wind turbine (101) and, wherein operating the wind turbine (101) comprises
measuring a further first parameter by a further first measuring unit (105), wherein the measured further first parameter is indicative of an absolute and/or a relative position of at least a second part of the tower (104),
measuring a further second parameter by a further second measuring unit (106), wherein the measured further second parameter is indicative of an absolute and/or a relative position of at least a third part of the tower (104), and
estimating the position of the at least first part of the tower (104), wherein the estimating comprises employing a state estimator (205) that estimates a state of the tower (104) based on at least the measured further first parameter and the measured further second parameter and deriving the position from the estimated state of the tower (104).

5. The method of claim 4, wherein the further first parameter comprises at least one of an acceleration, a velocity and a position of the at least second part of the tower (104), and/or
wherein the further second parameter comprises at least one of an acceleration, a velocity and a position of the at least third part of the tower (104).

6. The method of any of claims 3 to 5, wherein the estimated position of the at least part of the rotor blade (103) is derived from an estimated state of the rotor blade (103), wherein the estimated state of the rotor blade (103) is estimated at a point of time after the rotor blade (103) has passed the tower and before a future point of time at which the rotor blade passes the tower again and wherein deriving the estimated position of the at least part of the rotor blade (103) comprises
predicting the position of the at least part of the rotor blade at the future point of time based at least on the estimated state of the rotor blade,
and/or,
wherein the estimated position of the at least part of the tower (104) is derived from an estimated state of the tower (104), wherein the estimated state of the tower (104) is estimated at a point of time after the rotor blade (103) has passed the tower (104) and before a future point of time at which the rotor blade (103) passes the tower again and wherein deriving the estimated position of the at least part of the tower (104) comprises
predicting the position of the at least part of the tower (104) at the future point of time based at least on the estimated state of the tower.

7. The method of any of claims 3 to 6, wherein operating the wind turbine (101) comprises
determining whether the determined distance exceeds a threshold,
and/or wherein operating the wind turbine (101) comprises
deriving, at least from the determined distance between the tower and the rotor blade, a likelihood that the rotor blade (103) collides with the tower at a future point of time at which the rotor blade passes the tower, and
determining whether the derived likelihood exceeds a threshold,
wherein preferably deriving the likelihood is further based on one or more further determined distances between the tower (103) and the rotor blade (104), the one or more further determined distances being determined at a point of time before the distance is determined.

8. The method of claim 7, wherein the method comprises
adjusting an operation of the wind turbine (101) when it is determined that the threshold is exceeded, and/or
continuing an operation of the wind turbine (101) when it is determined that the threshold is not exceeded.

9. The method of any of the preceding claims, wherein employing the state estimator comprises employing a prediction/correction algorithm, in particular a Kalman filter, and/or a Luenberger observer.

10. A control system for controlling an operation of a wind turbine, wherein the control system (120) is configured to perform a method according to any of claims 1-9.

11. A system for controlling an operation of a wind turbine, wherein the system (100) comprises
a first measuring unit (107) comprising an inertial measurement unit,
a second measuring unit (108) comprising at least a receiver for receiving global positioning data, and
a control system (120) according to claim 10, wherein the control system is communicatively coupled to the wind turbine (101), the first measuring unit and the second measuring unit, and wherein the system preferably comprises
a further first measuring unit (105) communicatively coupled to the control system (120), and
a further second measuring unit (106) communicatively coupled to the control system (120).

12. The system of claim 11, wherein at least one of the first measuring unit (107) and the second measuring unit (108) is mounted to a rotor blade (103) of the wind turbine (101), and/or
wherein at least one of the further first measuring unit (105) and the further second measuring unit (106) are mounted to a tower (104) of the wind turbine (101).

13. The system of claim 11 or 12, wherein the first measuring unit (107) comprises at least one of an accelerometer, an angular rate sensor, and a gyroscope, and/or
wherein the second measuring unit (108) comprises at least a GNSS receiver and/or a GPS receiver.

14. The system of any of claims 11 to 13,
wherein the further first measuring unit (105) comprises at least one of an accelerometer, an angular rate sensor, a gyroscope and an inertial measurement unit, and/or
wherein the further second measuring unit (106) comprises at least a receiver for receiving global positioning data, in particular a GNSS receiver and/or a GPS receiver.

15. A computer program for controlling an operation of a wind turbine, wherein the computer program comprises control instructions which, when executed by a processing unit (121) of a control system (120) controlling the operation of the wind turbine (101), cause the processing unit to perform the method according to any of claims 1-9.

## Patentansprüche

1. Verfahren zum Schätzen einer Position mindestens eines Teiles eines Rotorblattes eines Rotors einer Windturbine während eines Betriebs der Windturbine, wobei der Teil des Rotorblattes ein erster Teil ist, wobei das Rotorblatt (103) infolge einer Auslenkbewegung des Rotorblattes in Richtung eines oder von einem Turm (104) der Windturbine (101) weg ausgelenkt wird und wobei die Position die Auslenkung angibt, wobei das Verfahren Folgendes umfasst:
Messen eines ersten Parameters durch eine erste Messeinheit (107), wobei die erste Messeinheit (107) eine Trägheitsmesseinheit umfasst, wobei der gemessene erste Parameter eine relative Position mindestens eines zweiten Teiles des Rotorblattes (103) oder eines weiteren Rotorblattes (102) des Rotors angibt,
Messen eines zweiten Parameters durch eine zweite Messeinheit (108), wobei die zweite Messeinheit (108) mindestens einen Empfänger zum Empfangen globaler Positionierungsdaten umfasst,
wobei der gemessene zweite Parameter eine absolute Position mindestens eines dritten Teiles des Rotorblattes (103) oder des weiteren Rotorblattes (102) des Rotors angibt, und
Schätzen der Position des mindestens ersten Teiles des Rotorblattes (103), wobei das Schätzen Einsetzen eines Zustandsschätzers (210), der einen Zustand des Rotorblattes (103) mindestens basierend auf dem gemessenen ersten Parameter und dem gemessenen zweiten Parameter schätzt, und Ableiten der Position aus dem geschätzten Zustand des Rotorblattes (103) umfasst.

2. Verfahren nach Anspruch 1, wobei der erste Parameter mindestens eine einer Beschleunigung und einer Geschwindigkeit des mindestens zweiten Teiles des Rotorblattes (103) oder des weiteren Rotorblattes (102) umfasst und/oder
wobei der zweite Parameter eine Position des mindestens dritten Teiles des Rotorblattes (103) oder des weiteren Rotorblattes (102) umfasst.

3. Verfahren zum Betreiben einer Windturbine, wobei das Betreiben der Windturbine Folgendes umfasst:
Durchführen eines Verfahrens nach Anspruch 1 oder 2, um eine Position mindestens eines Teiles eines Rotorblattes (103) eines Rotors der Windturbine (101) während des Betriebs der Windturbine zu schätzen, und
Bestimmen eines Abstands zwischen einem Turm (104) der Windturbine (101) und dem Rotorblatt (103) basierend auf einer Position mindestens eines Teiles des Turmes (104) und der geschätzten Position des mindestens einen Teiles des Rotorblattes (103).

4. Verfahren nach Anspruch 3, wobei der mindestens eine Teil des Turmes (104) mindestens einen ersten Teil des Turmes (104) umfasst und wobei der Turm (104) eine Turmbewegung während des Betriebs der Windturbine (101) durchführt und wobei das Betreiben der Windturbine (101) Folgendes umfasst:
Messen eines weiteren ersten Parameters durch eine weitere erste Messeinheit (105), wobei der gemessene weitere erste Parameter eine absolute und/oder eine relative Position mindestens eines zweiten Teiles des Turmes (104) angibt,
Messen eines weiteren zweiten Parameters durch eine weitere zweite Messeinheit (106), wobei der gemessene weitere zweite Parameter eine absolute und/oder eine relative Position mindestens eines dritten Teiles des Turmes (104) angibt und
Schätzen der Position des mindestens ersten Teiles des Turmes (104), wobei das Schätzen Einsetzen eines Zustandsschätzers (205), der einen Zustand des Turmes (104) mindestens basierend auf dem gemessenen weiteren ersten Parameter und dem gemessenen weiteren zweiten Parameter schätzt, und Ableiten der Position aus dem geschätzten Zustand des Turmes (104) umfasst.

5. Verfahren nach Anspruch 4, wobei der weitere erste Parameter mindestens eine einer Beschleunigung, einer Geschwindigkeit und einer Position des mindestens zweiten Teiles des Turmes (104) umfasst und/oder
wobei der weitere zweite Parameter mindestens eine einer Beschleunigung, einer Geschwindigkeit und einer Position des mindestens dritten Teiles des Turmes (104) umfasst.

6. Verfahren nach einem der Ansprüche 3 bis 5, wobei die geschätzte Position des mindestens einen Teiles des Rotorblattes (103) aus einem geschätzten Zustand des Rotorblattes (103) abgeleitet wird, wobei der geschätzte Zustand des Rotorblattes (103) zu einem Zeitpunkt, nachdem das Rotorblatt (103) den Turm passiert hat, und vor einem künftigen Zeitpunkt, zu dem das Rotorblatt den Turm erneut passiert, geschätzt wird und wobei das Ableiten der geschätzten Position des mindestens einen Teiles des Rotorblattes (103) Folgendes umfasst:
Vorhersagen der Position des mindestens einen Teiles des Rotorblattes zu dem künftigen Zeitpunkt mindestens basierend auf dem geschätzten Zustand des Rotorblattes,
und/oder
wobei die geschätzte Position des mindestens einen Teiles des Turmes (104) aus einem geschätzten Zustand des Turmes (104) abgeleitet wird, wobei der geschätzte Zustand des Turmes (104) zu einem Zeitpunkt, nachdem das Rotorblatt (103) den Turm (104) passiert hat, und vor einem künftigen Zeitpunkt, zu dem das Rotorblatt (103) den Turm erneut passiert, geschätzt wird und wobei das Ableiten der geschätzten Position des mindestens einen Teiles des Turmes (104) Folgendes umfasst:
Vorhersagen der Position des mindestens einen Teiles des Turmes (104) zu dem künftigen Zeitpunkt mindestens basierend auf dem geschätzten Zustand des Turmes.

7. Verfahren nach einem der Ansprüche 3 bis 6, wobei das Betreiben der Windturbine (101) Folgendes umfasst:
Bestimmen, ob der bestimmte Abstand einen Schwellenwert überschreitet,
und/oder wobei das Betreiben der Windturbine (101) Folgendes umfasst:
Ableiten, mindestens aus dem bestimmten Abstand zwischen dem Turm und dem Rotorblatt, einer Wahrscheinlichkeit, dass das Rotorblatt (103) zu einem künftigen Zeitpunkt, zu dem das Rotorblatt den Turm passiert, mit dem Turm kollidiert, und
Bestimmen, ob die abgeleitete Wahrscheinlichkeit einen Schwellenwert überschreitet,
wobei das Ableiten der Wahrscheinlichkeit vorzugsweise ferner auf einem oder mehreren weiteren bestimmten Abständen zwischen dem Turm (103) und dem Rotorblatt (104) basiert, wobei der eine oder die mehreren weiteren bestimmten Abstände zu einem Zeitpunkt, bevor der Abstand bestimmt wird, bestimmt werden.

8. Verfahren nach 7, wobei das Verfahren Folgendes umfasst:
Anpassen eines Betriebs der Windturbine (101), wenn bestimmt wird, dass der Schwellenwert überschritten wird, und/oder
Fortsetzen eines Betriebs der Windturbine (101), wenn bestimmt wird, dass der Schwellenwert nicht überschritten wird.

9. Verfahren nach einem der vorhergehenden Ansprüche, wobei das Einsetzen des Zustandsschätzers Einsetzen eines Vorhersage-/Korrekturalgorithmus, insbesondere eines Kalman-Filters und/oder eines Luenberger-Beobachters, umfasst.

10. Steuersystem zum Steuern eines Betriebs einer Windturbine, wobei das Steuersystem (120) dazu konfiguriert ist, ein Verfahren nach einem der Ansprüche 1-9 durchzuführen.

11. System zum Steuern eines Betriebs einer Windturbine, wobei das System (100) Folgendes umfasst:
eine erste Messeinheit (107), umfassend eine Trägheitsmesseinheit,
eine zweite Messeinheit (108), umfassend mindestens einen Empfänger zum Empfangen globaler Positionierungsdaten, und
ein Steuersystem (120) nach Anspruch 10, wobei das Steuersystem kommunikativ an die Windturbine (101), die erste Messeinheit und die zweite Messeinheit gekoppelt ist und wobei das System vorzugsweise Folgendes umfasst:
eine weitere erste Messeinheit (105), die kommunikativ an das Steuersystem (120) gekoppelt ist, und
eine weitere zweite Messeinheit (106), die kommunikativ an das Steuersystem (120) gekoppelt ist.

12. System nach Anspruch 11, wobei mindestens eine der ersten Messeinheit (107) und der zweiten Messeinheit (108) an einem Rotorblatt (103) der Windturbine (101) montiert ist und/oder wobei mindestens eine der weiteren ersten Messeinheit (105) und der weiteren zweiten Messeinheit (106) an einem Turm (104) der Windturbine (101) montiert ist.

13. System nach Anspruch 11 oder 12, wobei die erste Messeinheit (107) mindestens eines von einem Beschleunigungsmesser, einem Winkelgeschwindigkeitssensor und einem Gyroskop umfasst und/oder wobei die zweite Messeinheit (108) mindestens einen GNSS-Empfänger und/oder einen GPS-Empfänger umfasst.

14. System nach einem der Ansprüche 11 bis 13,
wobei die weitere erste Messeinheit (105) mindestens eines von einem Beschleunigungsmesser, einem Winkelgeschwindigkeitssensor, einem Gyroskop und einer Trägheitsmesseinheit umfasst und/oder
wobei die weitere zweite Messeinheit (106) mindestens einen Empfänger zum Empfangen globaler Positionierungsdaten, insbesondere einen GNSS-Empfänger und/oder einen GPS-Empfänger, umfasst.

15. Computerprogramm zum Steuern eines Betriebs einer Windturbine, wobei das Computerprogramm Steueranweisungen umfasst, die, wenn sie durch eine Verarbeitungseinheit (121) eines Steuersystems (120) ausgeführt werden, das den Betrieb der Windturbine (101) steuert, die Verarbeitungseinheit dazu veranlassen, das Verfahren nach einem der Ansprüche 1-9 durchzuführen.

## Revendications

1. Procédé d'estimation d'une position d'au moins une partie d'une pale de rotor d'un rotor d'éolienne pendant le fonctionnement de l'éolienne, la partie de la pale de rotor étant une première partie, dans lequel la pale de rotor (103) est déviée en raison d'un mouvement de déviation de la pale de rotor vers ou loin d'une tour (104) de l'éolienne (101) et dans lequel la position est indicative de ladite déviation, dans lequel le procédé comprend :
la mesure d'un premier paramètre par une première unité de mesure (107), la première unité de mesure (107) comprenant une unité de mesure inertielle, dans lequel le premier paramètre mesuré est indicatif d'une position relative d'au moins une deuxième partie de la pale de rotor (103) ou d'une pale de rotor supplémentaire (102) du rotor,
la mesure d'un second paramètre par une seconde unité de mesure (108), la seconde unité de mesure (108) comprenant au moins un récepteur pour recevoir des données de positionnement global, dans lequel le second paramètre mesuré est indicatif d'une position absolue d'au moins une troisième partie de la pale de rotor (103) ou de la pale de rotor supplémentaire (102) du rotor, et
l'estimation de la position de l'au moins une première partie de la pale de rotor (103), dans lequel l'estimation comprend l'emploi d'un estimateur d'état (210) qui estime un état de la pale de rotor (103) sur la base d'au moins le premier paramètre mesuré et le second paramètre mesuré et la dérivation de la position à partir de l'état estimé de la pale de rotor (103).

2. Procédé selon la revendication 1, dans lequel le premier paramètre comprend au moins un élément parmi une accélération et une vitesse de l'au moins une deuxième partie de la pale de rotor (103) ou de la pale de rotor supplémentaire (102), et/ou dans lequel le second paramètre comprend une position de l'au moins troisième partie de la pale de rotor (103) ou de la pale de rotor supplémentaire (102).

3. Procédé d'exploitation d'une éolienne, dans lequel l'exploitation de l'éolienne comprend :
la réalisation d'un procédé selon la revendication 1 ou 2 afin d'estimer une position d'au moins une partie d'une pale de rotor (103) d'un rotor de l'éolienne (101) pendant le fonctionnement de l'éolienne, et
la détermination d'une distance entre une tour (104) de l'éolienne (101) et la pale de rotor (103) sur la base d'une position d'au moins une partie de la tour (104) et de la position estimée de l'au moins une partie de la pale de rotor (103).

4. Procédé selon la revendication 3, dans lequel l'au moins une partie de la tour (104) comprend au moins une première partie de la tour (104) et dans lequel la tour (104) effectue un mouvement de tour pendant le fonctionnement de l'éolienne (101) et, dans lequel l'exploitation de l'éolienne (101) comprend :
la mesure d'un premier paramètre supplémentaire par une première unité de mesure supplémentaire (105), dans lequel le premier paramètre supplémentaire mesuré est indicatif d'une position absolue et/ou relative d'au moins une deuxième partie de la tour (104),
la mesure d'un second paramètre supplémentaire par une seconde unité de mesure supplémentaire (106), dans lequel le second paramètre supplémentaire mesuré est indicatif d'une position absolue et/ou relative d'au moins une troisième partie de la tour (104), et
l'estimation de la position de l'au moins une première partie de la tour (104), dans lequel l'estimation comprend l'emploi d'un estimateur d'état (205) qui estime un état de la tour (104) sur la base d'au moins le premier paramètre supplémentaire mesuré et le second paramètre supplémentaire mesuré et la dérivation de la position à partir de l'état estimé de la tour (104).

5. Procédé selon la revendication 4, dans lequel le premier paramètre supplémentaire comprend au moins un élément parmi une accélération, une vitesse et une position de l'au moins une deuxième partie de la tour (104), et/ou
dans lequel le second paramètre supplémentaire comprend au moins un élément parmi une accélération, une vitesse et une position de l'au moins une troisième partie de la tour (104).

6. Procédé selon l'une quelconque des revendications 3 à 5, dans lequel la position estimée de l'au moins une partie de la pale de rotor (103) est dérivée d'un état estimé de la pale de rotor (103), dans lequel l'état estimé de la pale de rotor (103) est estimé à un instant après que la pale de rotor (103) a dépassé la tour et avant un instant futur auquel la pale de rotor repasse la tour et dans lequel la dérivation de la position estimée de l'au moins une partie de la pale de rotor (103) comprend :
la prédiction de la position de l'au moins une partie de la pale de rotor à l'instant futur sur la base d'au moins l'état estimé de la pale de rotor,
et/ou,
dans lequel la position estimée de l'au moins une partie de la tour (104) est dérivée d'un état estimé de la tour (104), dans lequel l'état estimé de la tour (104) est estimé à un instant après que la pale de rotor (103) a dépassé la tour (104) et avant un instant futur auquel la pale de rotor (103) repasse la tour et dans lequel la dérivation de la position estimée de l'au moins une partie de la tour (104) comprend :
la prédiction de la position de l'au moins une partie de la tour (104) à l'instant futur sur la base d'au moins l'état estimé de la tour.

7. Procédé selon l'une quelconque des revendications 3 à 6, dans lequel l'exploitation de l'éolienne (101) comprend :
la détermination si la distance déterminée dépasse un seuil,
et/ou dans lequel l'exploitation de l'éolienne (101) comprend :
la dérivation, au moins à partir de la distance déterminée entre la tour et la pale de rotor, d'une probabilité que la pale de rotor (103) entre en collision avec la tour à un instant futur auquel la pale de rotor passe la tour, et
la détermination si la probabilité dérivée dépasse un seuil,
dans lequel de préférence la dérivation de la probabilité est en outre basée sur une ou plusieurs distances déterminées supplémentaires entre la tour (103) et la pale de rotor (104), les une ou plusieurs distances déterminées supplémentaires étant déterminées à un instant avant que la distance ne soit déterminée.

8. Procédé selon la revendication 7, dans lequel le procédé comprend :
l'ajustement d'un fonctionnement de l'éolienne (101) lorsqu'il est déterminé que le seuil est dépassé, et/ou
la poursuite d'un fonctionnement de l'éolienne (101) lorsqu'il est déterminé que le seuil n'est pas dépassé.

9. Procédé selon l'une quelconque des revendications précédentes, dans lequel l'emploi de l'estimateur d'état comprend l'emploi d'un algorithme de prédiction/correction, en particulier un filtre de Kalman, et/ou un observateur de Luenberger.

10. Système de commande pour commander un fonctionnement d'une éolienne, dans lequel le système de commande (120) est configuré pour réaliser un procédé selon l'une quelconque des revendications 1 à 9.

11. Système pour commander un fonctionnement d'une éolienne, dans lequel le système (100) comprend :
une première unité de mesure (107) comprenant une unité de mesure inertielle,
une seconde unité de mesure (108) comprenant au moins un récepteur pour recevoir des données de positionnement global, et
un système de commande (120) selon la revendication 10, dans lequel le système de commande est couplé en communication à l'éolienne (101), à la première unité de mesure et à la seconde unité de mesure, et dans lequel le système comprend de préférence :
une première unité de mesure supplémentaire (105) couplée en communication au système de commande (120), et
une seconde unité de mesure supplémentaire (106) couplée en communication au système de commande (120).

12. Système selon la revendication 11, dans lequel au moins l'une de la première unité de mesure (107) et de la seconde unité de mesure (108) est montée sur une pale de rotor (103) de l'éolienne (101), et/ou
dans lequel au moins une de la première unité de mesure supplémentaire (105) et de la seconde unité de mesure supplémentaire (106) est montée sur une tour (104) de l'éolienne (101).

13. Système selon la revendication 11 ou 12, dans lequel la première unité de mesure (107) comprend au moins un élément parmi un accéléromètre, un capteur de vitesse angulaire et un gyroscope, et/ou
dans lequel la seconde unité de mesure (108) comprend au moins un récepteur GNSS et/ou un récepteur GPS.

14. Système selon l'une quelconque des revendications 11 à 13, dans lequel la première unité de mesure supplémentaire (105) comprend au moins un élément parmi un accéléromètre, un capteur de vitesse angulaire, un gyroscope et une unité de mesure inertielle, et/ou
dans lequel la seconde unité de mesure supplémentaire (106) comprend au moins un récepteur pour recevoir des données de positionnement global, en particulier un récepteur GNSS et/ou un récepteur GPS.

15. Programme informatique pour commander un fonctionnement d'une éolienne, dans lequel le programme informatique comprend des instructions de commande qui, lorsqu'elles sont exécutées par une unité de traitement (121) d'un système de commande (120) commandant le fonctionnement de l'éolienne (101), amènent l'unité de traitement à réaliser le procédé ; selon l'une quelconque des revendications 1 à 9.
